# EUROPEAN PATENT SPECIFICATION

(11) **EP 1 466 105 B1**
(45) Date of publication and mention of the grant of the patent: **11.01.2006**
(21) Application number: 03701937.9
(22) Date of filing: 17.01.2003
(51) Int. Cl.: F16D 27/112, B60K 6/02

(54) **CLUTCH BY WIRE HAVING MULTIPLE STARTER-GENERATOR MEANS**
ELEKTRISCH BETÄTIGBARE KUPPLUNG MIT MEHREREN STARTERGENERATORVORRICHTUNGEN
EMBRAYAGE PAR LIGNE A MOYENS DEMARREUR-GENERATEUR MULTIPLES

(30) Priority: 17.01.2002 NL 1019770
(43) Date of publication of application: 13.10.2004
(73) Proprietor: AB SKF, S-415 50 Göteborg (SE)
(72) Inventor: VAN HETEREN, Cornwin, Albertus, NL-3572 HT Utrecht (NL); EYRAUD, Emmanuel, Jacques, NL-3431 HG Nieuwegein (NL); VISSERS, Cornelius, Petrus, Antonius, NL-5275 BT Den Dungen (NL); ZWARTS, Jacobus, NL-3438 VA Nieuwegein (NL); KAPAAN, Hendrikus, Jan, NL-3435 DM Nieuwegein (NL)
(74) Representative: van Westenbrugge, Andries
(86) International application number: PCT/NL2003/000035
(87) International publication number: WO 2003/060341

(56) References cited:
- DE-A- 2 547 172
- GB-A- 1 204 007
- US-A- 4 792 029
- US-B1- 6 325 182

## Description

The invention is related to a clutch, comprising a clutch disc, a calliper means which carries opposite friction pads between which the clutch disc is accommodated, said clutch disc and calliper means each being connected to one of an ingoing and an outgoing member, biasing means for urging the opposite friction pads into frictional engagement with the clutch disc, motor means as well as screw actuation means which are driveable by the motor means for displacing the opposite friction pads with respect to each other against the biasing force exerted by the biasing means.

Such a clutch is known, see for example GB-A-1 204 007. The screw actuating means of said prior art clutch comprise a number of electric motors with associated actuators, which are regularly spaced in the circumferential direction with respect to the clutch disc. Said electric motors carry out a rotational motion together with the clutch. This means that the electric power must be transferred to said motors through a rotational electric connection, usually carried out with slip rings. Such a layout is cumbersome and prone to malfunction. The slip rings inevitably wear down, and in the end these wear phenomena will jeopardize the function of the clutch.

The object of the invention is therefore to provide a clutch of the type described before which is of a simpler and more reliable lay-out. This object is achieved in that the screw actuation means comprise two screw/nut actuators with opposite screw threads, which screw/nut actuators are coaxial to the clutch disc, one of the nut and screw of each actuator being rotatably supported with respect to either the ingoing or the outgoing member, and the other of said nut and screw of each actuator engaging the opposite friction pads, the motor means comprising two motors which each are coaxial to the clutch disc and which are driveably connected to a respective screw/nut actuator.

By properly rotating the screw/nut actuators with respect to each other, the desired amount of displacement of the opposite friction pads can be obtained and thus the desired amount of slippage in the clutch. The opposite screw threads of the actuators make it possible to obtain a well defined displacement of the opposite friction pads with respect to each other by judiciously selecting the rotation differences of the motors.

The motors can have a fixed stator, which means that no slip rings are required for powering them. This leads to a robust, relatively simple construction with less moveable parts, which enhances the reliablity of the clutch. The motors are preferably of an electric type.

Preferably the screw/nut actuators have screws which are rigidly connected to each other, said screws engaging the opposite friction pads. The drive connection between the motors and the actuators may be carried out in several ways, e.g. through a belt or chain, but preferably gear drives are applied. These gear drives may comprise a ring gear wheel connected to the rotor of the motor, an external nut gear wheel connected to the nut of the screw/nut actuator, as well as intermediate gear wheels which engage the ring gear wheel and the nut gear wheel, said intermediate gear wheels being rotatably supported on a mass body which is coaxial to the clutch disc and which is supported with respect to the ingoing member. By means of the gear wheels, also the transmission ratio can be influenced.

The mass body onto which the sets of intermediate gear wheels are mounted advantageously provides a flywheel function for the engine onto which the clutch is to be mounted, preferably a vehicle combustion engine.

According to a further advantage of the invention, the clutch may be integrated with a starter for such vehicle engine. In this respect, the mass body may comprise two mass body parts one of whch is rigidly connected to the ingoing member, and the other of which is rotatably supported with respect to the first mass body part and is rigidly connected to the calliper means, said mass body parts engaging each other furthermore through tangentially oriented springs for transferring a torque, each mass body part carrying a set of intermediate gear wheels of one of the gear drives.

By controlling the electric motors of the clutch in such a way that they move in unison, a corresponding rotation is imparted onto the ingoing member, which rotation causes the vehicle combustion engine to start. The tangential spring arrangement between the mass body halves acts as the ususal damping mechanism for coping with peak torques which may occur during starting.

Preferably, the nuts of the actuators can be rotatably supported through oppositely oriented angular contact bearings with respect to the mass body part which is rigidly connected to the calliper means. The biasing means may comprise compression springs which are accomodated in blind bores and which engage a pressure plate which carries one of the sets of friction pads. The screws of the actuators may be rigidly connected to the pressure plate which carries said one set of friction pads, the calliper means having an inwardly extending bracket which carries the opposite set of friction pads and the clutch disc being translatable in the axial direction. The translatory play of the clutch disc enables a compensation of friction pad wear.

A static or dynamic balancing unit may be incorporated for the purpose of balancing the clutch. Preferably, an automatic balancing unit is applied so as to minimize the vibrations in the driveline.

A housing can be provided onto which the stators of the motor means are rigidly connected, said housing having opposite coaxial openings for the ingoing member and outgoing member.

The stator and rotor of the electric motors can furthermore be applied for generating current when the vehicle engine is running (generator function).

The description of the clutch by wire and integrated ISG concerns a so-called "medium" or "mild" hybrid transmission. In this driveline concept the electric motor(s) supply only a short boost torque at any driving condition. In a so-called "full" hybrid transmission, the electric motor(s) drive the vehicle from a standstill position to a defined speed, after which the electric motor is switched off. The vehicle power propulsion is then taken over by a relative small internal combustion engine. The electric motors as described earlier then consist of a small electric motor to start up the internal combustion engine, and a big electric motor to drive the vehicle as described above. For both types of transmissions, the electric motor(s) can consist of a permanent magnete type or a brush type, with the rotor concentric or right angle towards the centerline of the clutch. When the rotation direction of the electric motor is switched in opposite direction, then a reverse driving mode for the vehicle will be established.

The invention will now be described further with reference to an embodiment of the clutch according to the invention shown in the figures.
Fig. 1 shows a view in prospective and partly taken away of the clutch.
Fig. 2 shows a radial cross-section through the clutch according to figure 1.

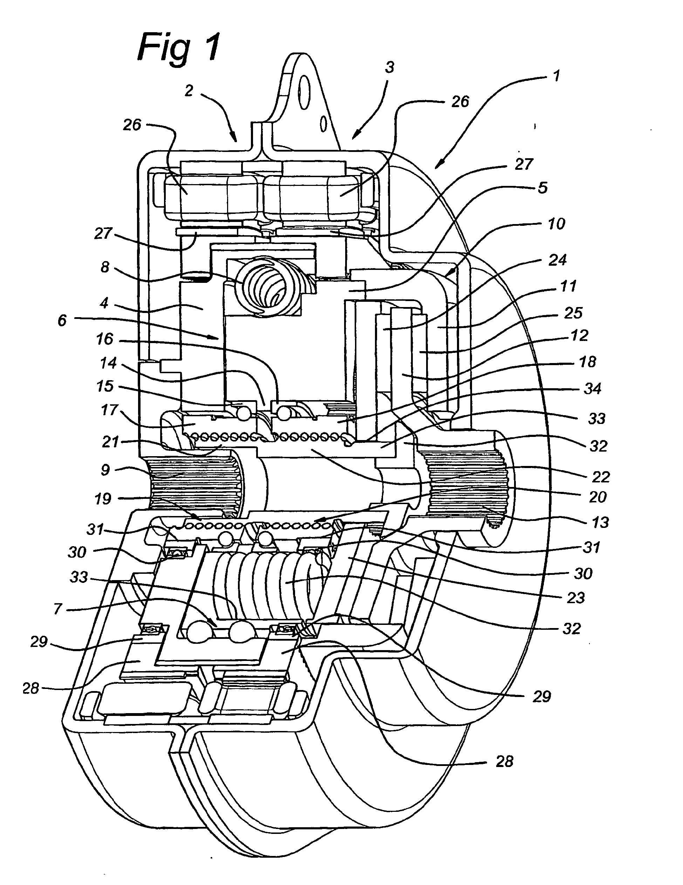

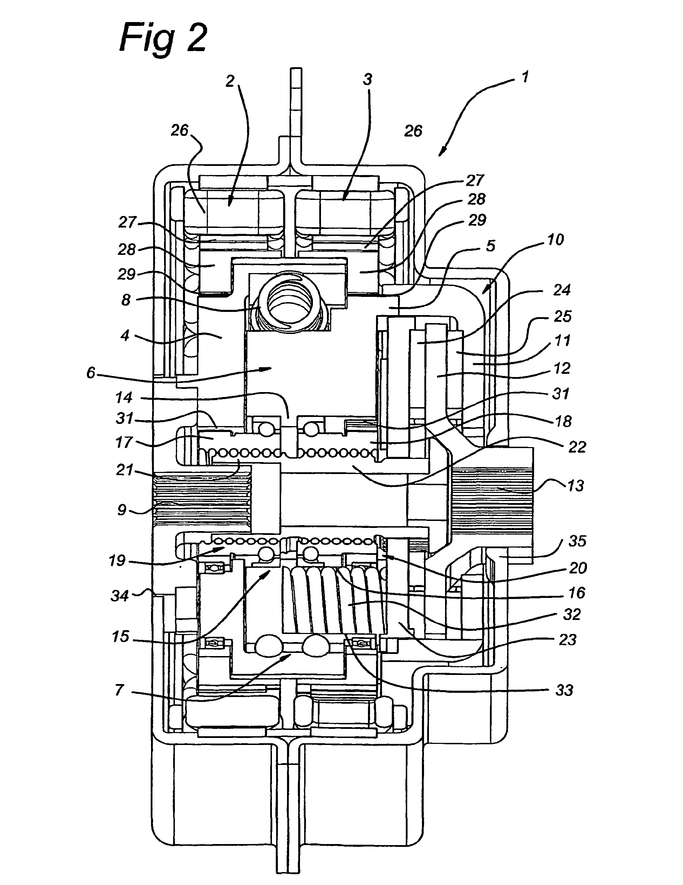

The clutch as shown in figures 1 and 2 comprises a housing 1, which accommodates two coaxial electric motors 2, 3. Said electric motors respectively engage the mass body parts 4, 5 of the mass body 6. These mass body parts 4, 5 are rotatable with respect to each other through the integrated double row deep groove ball bearing 7. Furthermore, they engage each other in a known way through a number of regularly spaced tangential springs 8, in such a way that they may carry out limited relative rotations.

One of the mass body parts, that is mass body part 4, is connected to an ingoing, axially grooved sleeve 9, which is to be connected to an engine, e.g. a vehicle combustion engine. The other mass body part 5 is connected to a calliper means 10, which has a bracket 11 that overlaps the clutch disc 12. This clutch disc 12 carries a tubular drive member 13 which is to be connected to e.g. the manual or automatic transmission of a vehicle etc. by means of e.g. splines.

The mass body part 5 has been provided with an internal, radially extending abutment 14, onto which two opposite angular contacted ball bearings 15, 16 are supported. These ball bearings 15, 16 are separated or are integrated with the nuts 17, 18 of the two screw actuators 19, 20, which furthermore comprise the screws 21, 22. The nuts 17, 18 and the screws 21, 22 have opposite screw threads, and engage each other through balls (not shown). The screws 21, 22 are connected to a slidable pressure plate 23 through the extension 33. By means of a spline/groove connection 34, these components are non-rotatably held with respect to each other. Upon moving the screws 21, 22, the abutment piece 33 comes to rest against the pressure plate 23, and subsequently moves it away from the bracket 11 so as to make the clutch disc 12 and friction pads 24, 254 slip with respect to each other, which engages one of the sets of friction pads 24. The opposite set of friction pads 25 is connected to the bracket 11; the clutch disc 12 is accommodated between said sets of friction pads 24, 25.

The electric motors 2, 3 each have a stator 26 which is mounted to the housing, fixed to the engine housing or integrated in e.g. the housing of a self contained CVT-by-wire transmission. The rotors 27 of said electric motors 2, 3 are each connected to separate ring gear wheels 28. Said ring gear wheels 28 mesh with a set of intermediate gear wheels 29 each, which through bearings 30 are supported with respect to the respective mass body parts 4, 5. The nuts 17, 18 have external gear wheels 31, which engage the respective intermediate gear wheels 29. In stead of gears also chain or toothed belt driven means can be considered.

The clutch in question can be controlled in several ways, which are described below. First of all, the motors 2, 3 can be driven with different rotational speeds, which impart different rotational movements on the nuts 17, 18 through the respective gear wheel transmissions 28-31. As a result of the oppositely oriented screw threads, the pressure plate 23 is moved in axial direction whereby a change in the frictional engagement between the clutch disc 12 and the opposite sets of friction pads 24, 25 is obtained. Thereby, a slipping, fixed or free relationship can be obtained between the ingoing member 9 and the outgoing member 13.

In the alternative, the electric motors 2, 3 can be moved in unison. Thereby, as a result of the opposite screw threads a rotational movement is imparted on the ingoing member 9. In this way, the clutch in question can function as a starter motor for the engine, e.g. a vehicle combustion engine which is connected to the ingoing member 9.

According to a third possibility, the electric motors 2, 3 function as an electric generator. When the engine connected to the ingoing member 9 is running, the rotors 27 move in unison with respect to the respective starters 26, in such a way that through a suitable electric control an electric current is generated.

In summary, the clutch according to the invention can function as a friction clutch, a starter motor as well as a generator.

The electric motors 2, 3 can have a permanent magnet, or can be of a brush type. The rotors 27 of these electric motors 2, 3 can be concentric to the clutch axis, or can be oriented at the right angles with respect to the clutch axis. The housing of the electric motors 2, 3 can be an integrated part of the housing of the engine onto which the clutch is to be connected. Furthermore, these electric motor housings are integrated in the transmission or in an intermediate housing.

The clutch in question can be applied for automatic purposes, as mentioned, but also for industrial applications such as lathes, digging machines, windmills etc.

The components of the clutch can be made of metallic, non-metallic or composite materials, and can be manufactured by e.g. coldforming, casting or moulding process.

It is pointed out that pressure plate 23 is non-rotatable with respect to the friction pads 24 and the mass body 5.

The clutch in question can be part of a continuously variable transmission driveline, which comprises an electrically actuatable continuously variable transmission, as well as a forward/reverse drive which is electrically actuatable. In the alternative, the clutch can be part of an automotive manual by shifted transmission driveline or an automatic gear transmission driveline.

## Claims

1. Clutch, comprising a clutch disc (12), a calliper means (10) which carries opposite friction pads (24, 25) between which the clutch disc (12) is accommodated, said clutch disc (12) and calliper means (10) each being connected to one of an ingoing (9) and an outgoing (13) member, biasing means (32) for urging the opposite friction pads (24, 25) into frictional engagement with the clutch disc (12), motor means (2, 3) as well as screw actuation means (17-22) which are driveable by the motor means (2, 3) for displacing the opposite friction pads (24, 25) with respect to each other against the biasing force exerted by the biasing means (32), **characterized in that** the screw actuation means comprise two screw/nut actuators (17-22) with opposite screw threads, which screw/nut actuators (17-22) are coaxial to the clutch disc (12), one of the nut (17, 18) and screw (21, 22) of each actuator being rotatably supported with respect to either the ingoing (9) or the outgoing (13) member, and the other of said nut (17, 18) and screw (21, 22) of each actuator engaging the opposite friction pads (24, 25), the motor means (2, 3) comprising two motors which each are coaxial to the clutch disc (12) and which are driveably connected to a respective screw/nut actuator (17-22).

2. Clutch according to claim 1, wherein the screw/nut actuators (17-22) have screws (21, 22) which are rigidly connected to each other, said screws engaging the opposite friction pads (24, 25).

3. Clutch according to claim 1 or 2, wherein the motors (2, 3) are of an electric type and are concentric or at right angles to the axis.

4. Clutch according to claim 3, wherein each motor (2, 3) engages the respective screw/nut actuator through a gear drive (28-31).

5. Clutch according to claim 4, wherein each gear drive comprises a ring gear wheel (28) connected to the rotor (27) of the motor (2, 3), an external nut gear wheel (31) connected to the nut (17, 18) of the screw/nut actuator, as well as intermediate gear wheels (29) which engage the ring gear wheel (28) and the nut gear wheel (31), said intermediate gear wheels (29) being rotatably supported on a mass body (6) which is coaxial to the clutch disc (12) and which is supported with respect to the ingoing member (9).

6. Clutch according to claim 5, wherein the mass body (6) comprises two mass body parts (4, 5) one (4) of which is rigidly connected to the ingoing member (9), and the other (5) of which is rotatably supported with respect to the first mass body part (4) and is rigidly connected to the calliper means (10), said mass body parts (4, 5) engaging each other furthermore through tangentially oriented springs (8) for transferring a torque, each mass body part (4, 5) carrying a set of intermediate gear wheels (29) of one of the gear drives.

7. Clutch according to claim 6, wherein the nuts (17, 18) of the actuators are rotatably supported through oppositely oriented angular contact bearings (15, 16) with respect to the mass body part (5) which is rigidly connected to the calliper means (10).

8. Clutch according to claim 7, wherein the biasing means comprise compression springs (32) which are accommodated in blind bores (33) and which engage a pressure plate (23) which carries one of the sets of friction pads (24).

9. Clutch according to claim 8, wherein the screws (21, 22) of the actuators are connected through a spline/groove connection (34) and an abutment piece (33) to the pressure plate (23) which carries said one set of friction pads (24), the calliper means (10) having an inwardly extending bracket (11) which carries the opposite set of friction pads (25) and the clutch disc (12) being translatable in the axial direction.

10. Clutch according to any of the preceding claims, wherein a housing (1) is provided onto which the stators (26) of the motor means (2, 3) are rigidly connected, said housing (1) having opposite coaxial openings (34, 35) for the ingoing member (9) and outgoing member (13).

11. Clutch according to any of the preceding claims, wherein the screw/nut actuators (17-22) comprise a ball, roller or friction type actuator.

12. Clutch according to claim 11, wherein the ball screw actuator has ball recirculating means accommodated in the screw.

13. Clutch according to any of claims 3-9, wherein the electric motors are driveable as electric generators.

14. Clutch according to any of claims 3-9 and 13, wherein the electric motors are driveable in unison for providing a torque boost.

15. Clutch according to any of the preceding claims, wherein an automatic balancing device is provided.

## Patentansprüche

1. Kupplung mit einer Kupplungsscheibe (12), einer Zangeneinrichtung (10), die gegenüberliegende Reibbeläge (24, 25) trägt, zwischen denen die Kupplungsscheibe (12) eingebaut ist, wobei die Kupplungsscheibe (12) und die Zangeneinrichtung (10) jeweils mit einem des Eingangsgliedes (9) und des Ausgangsgliedes (13) verbunden sind, Vorspanneinrichtungen (32) zum Drücken der gegenüberliegenden Reibbeläge (24, 25) in einen Reibungseingriff mit der Kupplungsscheibe (12), Motoreinrichtungen (2, 3) als auch Schraubenbetätigungseinrichtungen (17-22), die durch die Motoreinrichtungen (2,3) zur Verschiebung der gegenüberliegenden Reibbeläge (24, 25) in bezug zueinander gegen die Vorspannkraft antreibbar sind, die durch die Vorspanneinrichtungen (32) ausgeübt wird, **dadurch gekennzeichnet, daß** die Schraubenbetätigungseinrichtungen zwei Schrauben/Mutter-Betätigungsglieder (17-22) mit entgegengesetzten Schraubenwindungen aufweisen, wobei die Schrauben/Mutter-Betätigungsglieder (17-22) zur Kupplungsscheibe (12) koaxial sind, wobei eine der Mutter (17, 18) und der Schraube (21,22) jedes Betätigungsgliedes bezüglich entweder des Eingangsglieds (9) oder des Ausgangsglieds (13) drehbar gehalten wird, und die andere der Mutter (17, 18) und der Schraube (21, 22) jedes Betätigungsgliedes an die gegenüberliegenden Reibbeläge (24, 25) angreift, wobei die Motoreinrichtungen (2,3) zwei Motoren aufweisen, die zur Kupplungsscheibe (12) koaxial sind und die betreibbar mit einem jeweiligen Schrauben/Mutter-Betätigungsglied (17-22) verbunden sind.

2. Kupplung nach Anspruch 1, wobei die Schrauben/Mutter-Betätigungsglieder (17-22) Schrauben (21, 22) aufweisen, die starr miteinander verbunden sind, wobei die Schrauben an die gegenüberliegenden Reibbeläge (24, 25) angreifen.

3. Kupplung nach Anspruch 1 oder 2, wobei die Motoren (2, 3) aus einem elektrischen Typ bestehen und konzentrisch oder unter rechten Winkeln zur Achse angeordnet sind.

4. Kupplung nach Anspruch 3, wobei jeder Motor (2, 3) durch einen Zahnradantrieb (28-31) an das jeweilige Schrauben/Mutter-Betätigungsglied angreift.

5. Kupplung nach Anspruch 4, wobei jeder Zahnradantrieb ein Hohlzahnrad (28), das mit dem Rotor (27) des Motors (2, 3) verbunden ist, ein äußeres Mutter-Zahnrad (31), das mit der Mutter (17, 18) des Schrauben/Mutter-Betätigungsgliedes verbunden ist, als auch Zwischenzahnräder (29) aufweist, die an das Hohlzahnrad (28) und das Mutter-Zahnrad (31) angreifen, wobei die Zwischenzahnräder (29) drehbar an einem Massenkörper (6) gehalten werden, der zur Kupplungsscheibe (12) koaxial ist und der bezüglich des Eingangsglieds (9) gehalten wird.

6. Kupplung nach Anspruch 5, wobei der Massenkörper (6) zwei Massenkörperteile (4,5) aufweist, von denen eines (4) starr mit dem Eingangsglied (9) verbunden ist und von denen das andere (5) bezüglich des ersten Massenkörperteils (4) drehbar gehalten wird und starr mit der Zangeneinrichtung (10) verbunden ist, wobei die Massenkörperteile (4, 5) ferner durch tangential orientierte Federn (8) zur Übertragung eines Drehmoments ineinander eingreifen, wobei jedes Massenkörperteil (4, 5) einen Satz von Zwischenzahnrädern (29) eines der Zahnradantriebe trägt.

7. Kupplung nach Anspruch 6, wobei die Muttern (17, 18) der Betätigungsglieder durch entgegengesetzt orientierte Winkelkontaktlager (15, 16) bezüglich des Massenkörperteils (5) drehbar gehalten werden, der starr mit der Zangeneinrichtung (10) verbunden ist.

8. Kupplung nach Anspruch 7, wobei die Vorspanneinrichtungen Druckfedern (32) aufweisen, die in Blindbohrungen (33) eingebaut sind und die an eine Druckplatte (23) angreifen, die einen der Sätze der Reibbeläge (24) trägt.

9. Kupplung nach Anspruch 8, wobei die Schrauben (21,22) der Betätigungsglieder durch eine Keil/Nut-Verbindung (34) und ein Anschlagstück (33) mit der Druckplatte (23), die den einen Satz Reibbeläge (24) trägt, verbunden sind, der Zangeneinrichtung (10) einen sich nach innen erstreckenden Träger (11) aufweist, der den gegenüberliegenden Satz Reibbeläge (25) hält, und der Kupplungsscheibe (12) in die axiale Richtung verschiebbar ist.

10. Kupplung nach einem der vorhergehenden Ansprüche, wobei ein Gehäuse (1) vorgesehen ist, mit dem die Statoren (26) der Motoreinrichtungen (2, 3) starr verbunden sind, wobei das Gehäuse (1) gegenüberliegende koaxiale Öffnungen (34, 35) für das Eingangsglied (9) und das Ausgangsglied (13) aufweist.

11. Kupplung nach einem der vorhergehenden Ansprüche, wobei die Schrauben/Mutter-Betätigungsglieder (17-22) ein Kugel-, Rollen- oder Reibungsbetätigungsglied aufweisen.

12. Kupplung nach Anspruch 11, wobei das Kugelgewindespindel-Betätigungsglied Kugelumlaufeinrichtungen aufweist, die in die Schraube eingebaut sind.

13. Kupplung nach einem der Ansprüche 3-9, wobei die Elektromotoren als elektrische Generatoren betreibbar sind.

14. Kupplung nach einem der Ansprüche 3-9 und 13, wobei die Elektromotoren zur Bereitstellung einer Drehmomenterhöhung in Übereinstimmung betreibbar sind.

15. Kupplung nach einem der vorhergehenden Ansprüche, wobei eine automatische Auswuchtungsvorrichtung vorgesehen ist.

## Revendications

1. Embrayage, comprenant un disque d'embrayage (12), un moyen formant étrier (10) qui supporte des patins de frein opposés (24, 25) entre lesquels le disque d'embrayage (12) est logé, ledit disque d'embrayage (12) et ledit moyen formant étrier (10) étant reliés chacun à un parmi un élément entrant (9) et un élément sortant (13), un moyen de sollicitation (32) destiné à solliciter les patins de frottement opposés (24, 25) en prise par frottement avec le disque d'embrayage (12), un moyen (2,3) formant moteur en plus d'un moyen (17-22) d'actionnement à vis qui peut être entraînés par le moyen (2, 3) formant moteur afin de déplacer les patins de frottement opposés (24, 25) l'un par rapport à l'autre contre la force de sollicitation exercée par le moyen de sollicitation (32), **caractérisé en ce que** le moyen d'actionnement à vis comprend deux actionneurs (17 à 22) à vis/écrou avec des filetages de vis opposés, lesquels actionneurs (17 à 22) à vis/écrou sont coaxiaux par rapport au disque d'embrayage (12), un ou une parmi l'écrou (17, 18) et la vis (21, 22) de chaque actionneur étant supporté en rotation par rapport soit à l'élément entrant (9) soit à l'élément sortant (13), et l'autre parmi ledit écrou (17, 18) et ladite vis (21, 22) de chaque actionneur mettant en prise les patins de frottement opposés (24, 25), le moyen (2, 3) formant moteur comprenant deux moteurs qui sont chacun coaxiaux par rapport au disque d'embrayage (12) et qui sont reliés en entraînement à un actionneur (17 à 22) à vis/écrou respectif.

2. Embrayage selon la revendication 1, dans lequel les actionneurs (17 à 22) à vis/écrou ont des vis (21, 22) qui sont reliées de façon rigide l'une à l'autre, lesdites vis mettant en prise les patins de frottement opposés (24, 25).

3. Embrayage selon la revendication 1 ou 2, dans lequel les moteurs (2, 3) sont de type électrique et sont concentriques ou à angle droit par rapport à l'axe.

4. Embrayage selon la revendication 3, dans lequel chaque moteur (2, 3) met en prise l'actionneur à vis/écrou respectif par l'intermédiaire d'un entraînement par engrenages (28 à 31).

5. Embrayage selon la revendication 4, dans lequel chaque entraînement par engrenage comprend une roue de couronne (28) reliée au rotor (27) du moteur (2, 3), une roue externe (31) à écrou reliée à l'écrou (17, 18) de l'actionneur à vis/écrou, en plus de roues intermédiaires (29) qui mettent en prise la roue de couronne (28) et la roue (31) à écrou, lesdites roues intermédiaires (29) étant supportées en rotation par un corps formant masse (6) qui est coaxial par rapport au disque d'embrayage (12) et qui est supporté par rapport à l'élément entrant (9).

6. Embrayage selon la revendication 5, dans lequel le corps formant masse (6) comprend deux parties (4, 5) de corps formant masse dont une (4) est reliée de façon rigide à l'élément entrant (9) et dont l'autre (5) est supportée en rotation par rapport à la première partie (4) de corps formant masse et est reliée de façon rigide au moyen formant étrier (10), lesdites parties (4, 5) de corps formant masse se mettant en prise l'une l'autre en outre par l'intermédiaire de ressorts (8) orientés de façon tangentielle afin de transmettre un couple, chaque partie (4, 5) de corps formant masse supportant un ensemble de roues intermédiaires (29) d'un parmi les entraînements par engrenage.

7. Embrayage selon la revendication 6, dans lequel les écrous (17, 18) des actionneurs sont supportés en rotation par l'intermédiaire de paliers à contact angulaire orientés de façon opposée (15, 16) par rapport à la partie (5) de corps formant masse qui est reliée de façon rigide au moyen formant étrier (10).

8. Embrayage selon la revendication 7, dans lequel les moyens de sollicitation comprennent des ressorts de compression (32) qui sont logés dans des alésages borgnes (33) et qui mettent en prise une plaque de pression (23) qui supporte un parmi les ensembles de patins de frottement (24).

9. Embrayage selon la revendication 8, dans lequel les vis (21, 22) des actionneurs sont reliées par l'intermédiaire d'une liaison cannelure/rainure (34) et d'une pièce de butée (33) à la plaque de pression (23) qui supporte ledit un ensemble de patins de frottement (24), ledit moyen formant étrier (10) ayant un support s'étendant vers l'intérieur (11) qui supporte l'ensemble opposé constitué des patins de frottement (25) et du disque d'embrayage (12) pouvait être déplacé dans la direction axiale.

10. Embrayage selon l'une quelconque des revendications précédentes, dans lequel un logement (1) est prévu sur lequel les stators (26) des moyens formant moteur (2, 3) sont reliés de façon rigide, ledit logement (1) comportant des ouvertures coaxiales opposées (34, 35) pour l'élément entrant (9) et l'élément sortant (13).

11. Embrayage selon l'une quelconque des revendications précédentes, dans lequel les actionneurs (17 à 22) à vis/écrou comprennent un actionneur de type à billes, à rouleaux ou à friction.

12. Embrayage selon la revendication 11, dans lequel l'actionneur à vis à billes comporte un moyen de recirculation de billes logé dans la vis.

13. Embrayage selon l'une quelconque des revendications 3 à 9, dans lequel les moteurs électriques peuvent être entraînés en tant que générateurs électriques.

14. Embrayage selon l'une quelconque des revendications 3 à 9 et 13, dans lequel les moteurs électriques peuvent être entraînés à l'unisson afin de fournir une augmentation momentanée du couple.

15. Embrayage selon l'une quelconque des revendications précédentes, dans lequel un dispositif d'équilibrage automatique est fourni.
